(19) **Europäisches Patentamt European Patent Office Office européen des brevets**

(11) **EP 4 701 124 A1**

(12) **EUROPEAN PATENT APPLICATION**

(43) Date of publication:
25.02.2026 Bulletin 2026/09

(21) Application number: 25197410.1

(22) Date of filing: 21.08.2025

(51) International Patent Classification (IPC):
*H04L 9/00* (2022.01)

(52) Cooperative Patent Classification (CPC):
**H04L 9/00**; H04L 2209/42

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **22.08.2024 US 202418812125**

(71) Applicants:
• Lemon Inc.
**Grand Cayman, KY1-1205 (KY)**
• Beijing Zitiao Network Technology Co., Ltd.
**Beijing 100190 (CN)**

(72) Inventors:
• **Bo, JIANG**
**Culver City, 90230 (US)**
• **ZHANG, Wanrong**
**Culver City, 90230 (US)**
• **LU, Donghang**
**Culver City, 90230 (US)**
• **DU, Jian**
**Culver City, 90230 (US)**
• **YAN, Qiang**
**Beijing, 100028 (CN)**

(74) Representative: **Marks & Clerk LLP**
**15 Fetter Lane**
**London EC4A 1BW (GB)**

(54) **TARGETED FREQUENCY ESTIMATION IN LOCAL DIFFERENTIAL PRIVACY**

(57) Methods, systems, and apparatus, including computer programs encoded on computer storage media, for reducing variance for target frequency ranges. One of the methods includes sending a request for data to each of a plurality of user devices; determining a target frequency range for the requested data; computing a value for an inclusion probability according to the target frequency range; providing the value for the inclusion probability to each of the plurality of user devices; receiving privatized messages from each of the plurality of user devices, each privatized message being generated according to the provided value for the inclusion probability; and analyzing the privatized data extracted from the received messages.

FIG. 1

**Description**

BACKGROUND

Various systems can communicate over a network. For instance, a client device can send data to a server device, e.g., a cloud computing server. The data communicated over the network can be encrypted to increase data privacy, data security, or both.

SUMMARY

Some client devices can transmit data to a recipient processing system, e.g., a server or a cloud system, for analysis. Sending plain text data can have privacy concerns, security concerns, or both. For instance, a malicious actor can access the data before it is received by the recipient processing system. In some examples, the recipient processing system shouldn't be allowed access to data that is not anonymized, e.g., given user permissions.

To increase data security, reduce communication cost, or both, a client device can perform one or more local differential privacy (LDP) operations on data for transmission. This can include generating a result using a hash function, adding the result to an output vector, and introducing noise into the output vector. In some examples, the client device can select a hash function, randomly permute locations of values in the output vector, or a combination of both. The client device can transmit the output vector, e.g., an encrypted output vector, to the recipient processing system.

The recipient processing system can decrypt the output vector and extract one or more values from the decrypted vector. The recipient processing system can use the hash function to determine a mapping to one or more original values, e.g., that are potential inputs to the hash function that can cause generation of the result. The recipient processing system can update a matrix of values using the mapping. For instance, the matrix can include combinations of values from multiple different client devices. The combination of values can represent a total count of output vectors that included values that mapped to corresponding locations in the matrix. The recipient processing system can then use the matrix to perform one or more operations, e.g., given a number of client devices that had particular values in their corresponding output vectors. For example, the recipient processing system can use aggregated data to perform statistical analysis and use the result to perform various operations, e.g., to make particular content recommendations.

The client device and recipient processing system can follow an LDP protocol. For example, the client device can select a hash function out of multiple hash functions. In some examples, the client device can add the result of the hash function to an output vector according to a probability of including the result in the output vector.

Because there is some probability that the real data item will not be included in the messages sent to the recipient processing system, there is a difference between the actual data and the received data at the recipient processing system. This difference is represented as the variance of the received data, which, as described in more detail below, depends on various mechanism parameters used by the client devices in privatizing their respective data. The variance provides a representation of the utility of the data to the recipient processing system. The greater the variance, the less utility of the received data, e.g., the greater the difference of the received data from the actual data, the less useful the received data becomes.

Often there are particular frequency ranges that are of particular interest in the aggregated data received from client devices. For example, for online shopping, data analysts may be interested in the frequency of the most popular items, e.g., top-k items, which can then be used as item recommendations. In another example, the least popular items, e.g., least popular emojis, may be identified as candidates for replacement in a next released version. In yet another example, popularity tracking of particular content can have a frequency that varies from time to time. As noted above, the difference in the estimated frequency based on the aggregated data received from the client devices and the real frequency of the data is represented by the variance. This specification describes techniques for reducing the variance for particular targeted frequency ranges. Specifically, values for mechanism parameters can be adjusted to reduce the variance for a targeted frequency range.

In general, one innovative aspect of the subject matter described in this specification can be embodied in methods that include the actions of sending a request for data to each of a plurality of user devices; determining a target frequency range for the requested data; computing a value for an inclusion probability according to the target frequency range; providing the value for the inclusion probability to each of the plurality of user devices; receiving privatized messages from each of the plurality of user devices, each privatized message being generated according to the provided value for the inclusion probability; and analyzing the privatized data extracted from the received messages. Other embodiments of this aspect include corresponding computer systems, apparatus, and computer programs recorded on one or more computer storage devices, each configured to perform the actions of the methods.

This specification uses the term "configured" in connection with systems, apparatus, and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For special-purpose logic circuitry to be configured to perform particular operations or actions means that the circuitry has electronic logic that performs the operations or actions.

The subject matter described in this specification can be implemented in various implementations and may result in one or more of the following advantages. The probability that a data item on the client device is included in the data sent to the recipient processing system can be adjusted to reduce the variance with respect to a targeted frequency range and various mechanism parameters such as the local differential privacy parameter $\varepsilon$ or the size of the hash universe used. By targeting the specific frequency range and reducing the variance for that target frequency range, the utility can be increased for the particular received data of interest.

The details of one or more implementations of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 depicts an example environment in which one or more client devices provide data to a processing system using local differential privacy.
FIGS. 2A-2C illustrate relationships between mechanism parameters.
FIG. 3 is a flow diagram of an example process for determining mechanism parameters for targeted frequency ranges.
FIG. 4 is a block diagram of computing devices that may be used to implement the systems and methods described in this specification.

Like reference numbers and designations in the various drawings indicate like elements.

DETAILED DESCRIPTION

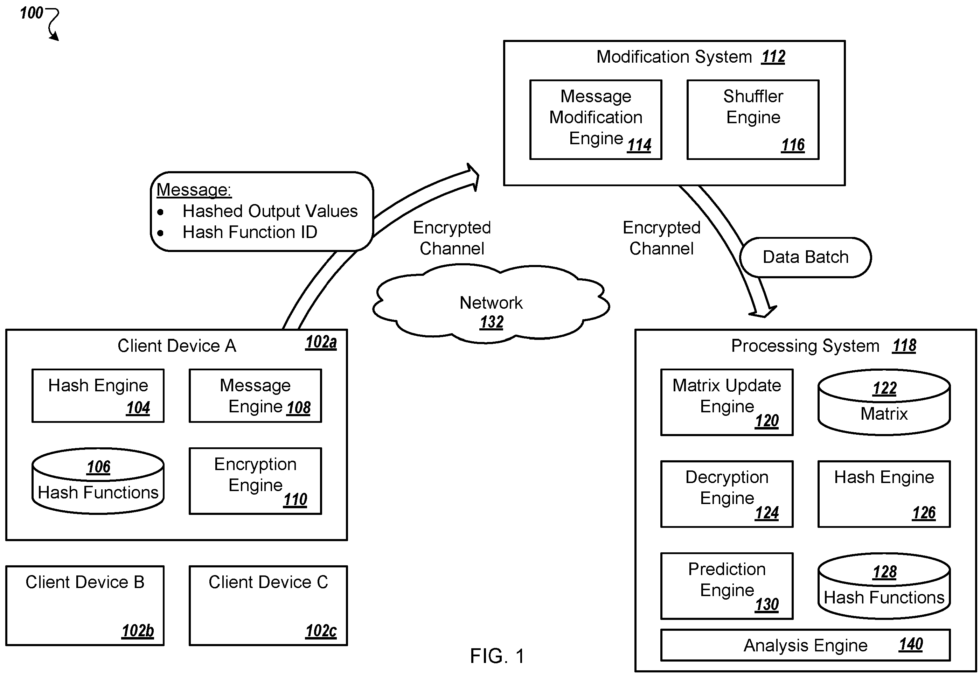

FIG. 1 depicts an example environment 100 in which one or more client devices 102a-c provide data to a processing system 118 using local differential privacy. The client devices 102a-c, or user devices, can use one or more local differential privacy ("LDP") operations to increase security of data transmitted to the processing system 118, reduce a communication cost of the transmission, e.g., in network bandwidth or other computational resources, or a combination of both.

The client devices 102a-c can use an LDP framework to mask some of the data for transmission to the processing system 118. The masking can cause the data to be anonymized before the data is transmitted by the respective client devices 102a-c. Compared to other systems in which the masking is performed by the processing system 118 or not performed at all, masking by the client devices 102a-c can increase data security and, as a result, data privacy by reducing a likelihood that a bad actor will be able to determine the specific data that is specific to a corresponding client device 102a-c.

The masking can include any appropriate operations on source data. For instance, the client devices 102a-c can generate noise data and combine the noise data with the source data. The client devices 102a-c can send the combined data to the processing system 118 for processing. Although the processing system 118 won't have only the source data, but will also have the noise data, the processing system 118 will still be able to process the combined data such that a utility of the results is substantially similar to a utility of processing results for the source data alone.

The client device A 102a, as an example of the client devices A-C 102a-c, includes a message engine 108. The message engine can generate a message by combining an output value, as an example of the source data, with one or more noise values. The output value can be any appropriate type of output, such as an output of an application executing on the client device A 102a.

An encryption engine 110 can encrypt the message for transmission to the processing system 118. The encryption engine 110 can use any appropriate process for encrypting the message.

The LDP framework can be configured to perform operations for any of a variety of LDP protocols. Different LDP protocols can have different parameters. For example, different LDP protocols can have different probabilities that the output value is included in a message for the processing system 118. Different LDP protocols can also have different hash functions, different numbers of hash functions, or different hashing domain sizes.

Some systems generate the combined data that includes both the output value and one or more noise values using unary encoding. In these systems, when the matrix 122 has m locations, and the values can be binary values that indicate whether the corresponding location is true, e.g., the corresponding URI was accessed or search string was used. Although combined data with m locations using unary encoding can maintain accuracy, transmission of a message with length m can use more computational resources than necessary, e.g., for the processing by the processing system 118. Further, although there can be a large variety of potential source data used to determine the output value, e.g., when the potential source data might be any of an infinite number of values such as URIs, the message itself cannot have an infinite length.

To reduce a size of the message, the client devices 102a-c can use a hash engine 104 to map an input domain for the source data from a large domain to a smaller, finite domain M. For instance, the hash engine 104 can map source data $d$ to an output value in the finite domain M. The output value can be an integer that is limited by the domain M, e.g., in $\{1, ..., m\}$ or $\{0, . . ., m-1\}$. Here, m can denote the hashing range and M can represent the hashing domain.

The message engine 108 can determine whether to include the output value in a message for the processing system 118. This can increase data security for the source data since the message might not always have a value for the actual source data. For instance, the message engine 108 can determine with a probability, $p$, of 0.5 whether to include the output value in the message. The probability can also be referred to in this specification as an "inclusion probability" since it represents the probability of including the source data value in the message.

The message engine 108 can generate the message using a result of the determination whether to include the output value in the message. For instance, when the message engine 108 determines to include the output value in the message and given a size s for the message, the message engine 108 can determine to generate s-1 noise values. When the message engine 108 determines to not include the output value in the message and given the size s for the message, the message engine 108 can determine to generate s noise values.

The message engine 108 can select one or more noise values, e.g., from an extension domain $M_{\bar{r}}$. When the domain of output values is M = $\{1, ..., m\}$ and for an output value of $r$, the extension domain $M_{\bar{r}}$ can be $\{1, 2, ... , r - 1, r + 1, ... , m\}$. The message engine 108 can use any appropriate process to select the one or more noise values. For instance, the message engine 108 can receive the output value r from the hash engine 104. The message engine 108 can compute the extension domain $M_{\bar{r}}$ using the domain M and the output value $r$. The message engine 108 can randomly select the noise values from the extension domain $M_{\bar{r}}$, e.g., given the determined number of noise values to select as either s or s-1.

The message engine 108 can generate a message for the processing system 118. The message can include any appropriate type of data structure that includes the one or more noise values and optionally the output value. For instance, the message engine 108 can generate an empty list v as the data structure. When including the output value $r$ in the message, the message engine 108 can append the output value $r$ to the empty list v. The message engine 108 can append the one or more noise values to the list v, whether v is an empty list or not.

In some examples, the message engine 108 can randomly permute the list v. For instance, when the output value $r$ is appended to the beginning of the empty list v, the message engine 108 can determine to randomly permute the list v so that the order in which the values appear in the list v is less likely to indicate anything about the source data. The message engine 108 can determine to skip randomly permuting the list v when the list v does not include the output value $r$.

The encryption engine 110 can generate an encrypted message using the list v as the body of the message, e.g., and a public encryption key. For instance, the body of the message can include an encrypted version of the hashed output value $r$ as a value in the list v.

Communications between the client devices 102a-c and the processing system 118 can use one or more encrypted channels. For instance, the communications can use a network 132 through which the messages, e.g., encrypted messages, are passed. The client devices 102a-c can each create a corresponding encrypted channel with the processing system 118, or the modification system 112 for implementations that include the modification system 112. The client devices 102a-c can then use the encrypted channels to transmit the messages to a corresponding destination, e.g., the modification system 112 or the processing system 118.

Algorithm 1, below, illustrates the process for generating an encrypted privatized message from a raw message.

## Algorithm 1: On-device LDP

**Input**: $\mathcal{H}$: the hash universe; $[m]$: extension domain; $d$: raw message; $s$: message size; $p$: inclusion probability; $pk$: destination public key.

      **Output**: Encrypted privatized message $v$.

Randomly select $h_j \sim \mathcal{H}$;

Calculate the hashed value $r = h_j[d]$;

Initiate output vector **x** as an empty set;

Add $r$ to **x** with probability of $p$;

**If** $r$ is added to **x then**

           Randomly select $s-1$ elements from $[m]/r$;

    **else**

           Randomly select $s$ elements from $[m]/r$;

    **end if**

    Add selected elements to **x**;

    Encrypt with destination public key

$$v = E_{pk}[\mathbf{x}, j];$$

**Return** $v$

The client device A 102a can transmit the encrypted and privatized message to the processing system 118. The processing system 118 receives the encrypted message. The processing system 118 can decrypt the encrypted message, e.g., using any appropriate process that corresponds to the encryption process.

The processing system 118 can use a prediction engine 130 to predict outputs given the data from the decrypted message. For instance, given a number of messages, e.g., included in a data batch, received from different ones of the client devices A-C 102a-c, all of which include at least some noise, the prediction engine 130 can make one or more inferences using the data batch. The processing system 118 can perform one or more actions using the one or more inferences.

The processing engine 118 can use an analysis engine 140 to evaluate the performance of different LDP protocols. For example, given a set of parameters for an LDP protocol, the system can make more inferences for the LDP protocol. The analysis engine 140 can be used to determine a variance for the LDP protocol. The computation of variance generally is described in greater detail below followed by a discussion of techniques to minimize variance for particular frequency ranges.

In some implementations, the environment 100 includes a modification system 112. The environment 100 can use the modification system 112 to increase data security, privacy, or both. For instance, the client device A 102a can provide the encrypted message to the modification system 112.

The modification system 112 includes a message modification engine 114. The message modification engine 114 removes data from the received message, e.g., to increase data security, privacy, or both. For instance, the message modification engine 114 can generate a second encrypted message that includes the encrypted body of the previous message but without any data that is specific to the client device A 102a from which the encrypted message was received, e.g., without any device A specific data. In this way, the second encrypted message can be further anonymized compared to the anonymized encrypted message. The message modification engine 114 can remove any device identifiers or other types of data that could potentially be used to associate the encrypted body of the message with the source client device A 102a. In some examples, the message modification engine 114 removes a header from the encrypted message to generate the second encrypted message that only includes the encrypted data from the body of the encrypted message.

The modification system 112 can include a shuffler engine 116 that randomly shuffles the second encrypted messages. For example, the modification system 112 can receive n encrypted messages from various client devices 102a-c. The modification system 112 can receive more than one message from some of the client devices 102a-c. The modification system 112 can receive a single message or no messages from some of the client devices 102a-c.

The shuffler engine 116 can, e.g., randomly, change the order in which the second encrypted messages are included in a data batch. For instance, as the modification system 112 receives encrypted messages, the modification system 112 can add the encrypted messages to a data batch, e.g., with a maximum size, in an order in which the encrypted messages are received. When the modification system 112 determines that a transmission criterion is satisfied, e.g., a time criterion or the data batch includes the maximum size of encrypted messages, the shuffler engine 116 changes the order in which the encrypted messages are included in the data batch to a second order that is different from the received in order. For example, the shuffler engine 116 can randomly change the order of two or more messages in the data batch, e.g., using any appropriate random permutation operations such as entry-by-entry brute force or Fisher-Yates.

In some examples, the modification system 112 can discard a message received from one of the client devices 102a-c. For instance, upon receiving a message from the client device A 102a, the modification system 112 can determine whether a number of messages received from the client device A 102a satisfies a message threshold, e.g., a maximum number of messages that can be received from any client device. If the threshold is not satisfied, the modification system 112 can process the message, e.g., using one or both of the message modification engine 114 or the shuffler engine 116.

If the threshold is satisfied, the modification system 112 can determine to skip processing the message. This can include deleting the data for the message from memory. By determining to skip processing the message, the modification system 112 can increase data security, e.g., reducing a likelihood that sensitive data for the client device A 102a might be inferred by the processing system 118. By determining to skip processing the message, the modification system 112 can reduce a likelihood of a data poisoning attack affecting any analysis by the processing system 118, e.g., destroying the aggregation in the data batch.

The processing system 118 can receive the data batch from the modification system 112. The processing system 118 can process the encrypted messages included in the data batch, e.g., as described above.

The processing system 118 receives the message that includes the list v. For instance, the processing system 118 can receive the encrypted message that encrypts the list v from either the client device A 102a, e.g., as a single message, or from the modification system 112, e.g., as a message in the data batch. The decryption engine 124 can decrypt the encrypted message, e.g., using a secret key.

A matrix update engine 120 updates the matrix 122 using data from the message, e.g., the decrypted message. When the output values are values in the domain M, the matrix 122 can have m values each of which correspond to a value in the domain M. For instance, the $i^{th}$ value in the domain M corresponds to the $i^{th}$ value in the matrix 122. In some examples, the matrix update engine 120 can add one to an existing value in the matrix at locations that are identified in the message. For example, when the message includes the value i, the matrix update engine 120 can add one to the existing value at the $i^{th}$ location in the matrix, e.g., matrix[i] = matrix[i] + 1.

When the matrix update engine 120 determines that the matrix 122 does not exist, the matrix update engine 120 can initialize the matrix 122. For instance, the matrix update engine 120 can initialize the matrix to be an array of length m with each value in the array being zero.

In some implementations, after decrypting the encrypted messages, e.g., from the data batch and using the decryption engine 124, the matrix update engine 120 included in the processing system 118 can update a matrix 122 using data from the decrypted message. For instance, the decrypted message, e.g., the combined data generated by the client device A 102a, can identify one or more locations in the matrix 122 that should be updated. The matrix 122 can include one entry for each of a fixed number of values generated by the client devices 102a-c, whether the values are the original output values or noise values. The values can represent any appropriate type of data, such as data generated by an application executing on the respective client device 102a-c, e.g., a social media application. In some examples, the values can represent a search string, a uniform resource identifier ("URI"), a website, a news article, or other appropriate types of data for an application on the client device 102a-c. For example, each location in the matrix 122 can indicate a number of times that the corresponding location was identified in a decrypted message. When the matrix 122 has one hundred locations, the fifteenth location can indicate a number of times that location was identified in a decrypted message. For instance, when a value at the fifteenth location is sixty-five, that indicates that sixty-five decrypted messages from any combination of client devices 102a-c identified the fifteenth location.

Algorithm 2 illustrates a procedure for constructing matrix 122.

**Algorithm 2 Constructing Matrix**

---

**Input**: $m$: domain of hash function, $k$: size of the hash universe, $\langle \mathbf{x}_i, j_i \rangle_{i=1}^{n}$: decrypted device messages.

**Output**: Matrix $\mathcal{M}$

Initialized $\mathcal{M} = [0]^{[m \times k]}$,

**for** Each pair of $\langle \mathbf{x}, j \rangle$ **do**

    **for** each value $x \in \mathbf{x}$ **do**

$$\mathcal{M}_j[x] \leftarrow \mathcal{M}_j[x] + 1$$

    **end for**

**end for**

**return** $\mathcal{M}$

The processing system 118 can determine to perform one or more actions using data in the matrix 122. For example, when the processing system 118 determines to perform an operation using a value d, the processing system 118 causes a hash engine 126 to compute a hash of the value d, e.g., the output value r. The hash engine 126 at the processing system 118 uses the same hash operations as the hash engine 104 at the client device A 102a so that the output values are the same for any given input value.

A prediction engine 130 determines a value in the matrix 122 for the output value r. For instance, the prediction engine 130 receives the output value r from the hash engine 126. The prediction engine 130 accesses the matrix 122 and determines the value $C(d)$ stored in the matrix 122 for the output value r, e.g., a total count stored in the $r^{th}$ location of the matrix 122.

The prediction engine 130 uses the value stored in the matrix 122 for the output value r to predict a quantity of times, $\hat{f}(d)$, that the source data was the cause of a message received from one of the client devices 102a-c. In other words, the estimated frequency at which the actual data is included in the messages sent to the recipient processing system 118. The prediction engine 130 can use equation (1), below, to predict the quantity of times $\hat{f}(d)$ that the source data was the cause of a message received from one of the client devices 102a-c. That is, the prediction engine 130 can predict the quantity of times, $\hat{f}(d)$, that a message corresponds to or was generated for the particular source data d.

In equation (1), p can be the probability that the output value r is included in the message, e.g., 0.5 or another appropriate value. As described in more detail below, p may be selected to minimize a variance for a particular target frequency range. In some examples, p can be computed using equation (2), below. As indicated above, n is the number of messages included in the data batch and m is the number of values in the domain M. As another example, p can represent the probability that a source data $x_1$ is mapped to its own support set. The support set of the source data $x_1$ is the set of messages that can have been caused by the source data $x_1$.

The variable q can be a value based on a differential privacy parameter, e.g., computed using equation (3), or another appropriate equation, below. q can represent the probability that a source data $x_2 \neq x_1$ is mapped to $x_1$'s support set. That is, q represents the probability that the source data $x_2$ is the cause of a message that can have been caused by the source data $x_1$. $\varepsilon$ can be the differential privacy parameter that represents a degree of security for the messages, the output values included in the messages, or both. In some instances, one or both of equations (2) and (3) can be used for a value of $\varepsilon$ that satisfies, e.g., is great than or equal to, a threshold value, e.g., a large $\varepsilon$ value.

$$\hat{f}(d) = \frac{C(d) - \frac{pn}{m} - qn\left(1 - \frac{1}{m}\right)}{(p-q)\left(1 - \frac{1}{m}\right)} \tag{1}$$

$$p = \frac{e^{\varepsilon}}{(e^{\varepsilon} + 1)} \tag{2}$$

$$q = \frac{1}{(e^{\varepsilon} + 1)} \tag{3}$$

Algorithm 3, below recaps the procedure for generating the estimated frequency of a particular data item d.

**Algorithm 3 Frequency Estimation**

**Input**: $d$: item to check frequency, $p$: inclusion probability, $s$: message size, $m$: domain of hash function, $\mathcal{H}$: hash universe, $\mathcal{M}$: aggregated sketch matrix.

**Output**: Estimated frequency $\hat{f}(d)$

Calculate $q$ according to:

$$q = \frac{p(s-1) + (1-p)s}{m-1};$$

Initialized count $C(d) = 0$;

**for** $j \in [1, 2, ..., k]$ **do**

$$C(d) \leftarrow C(d) + \mathcal{M}_j\big[h_j[d]\big];$$

**end for**

Get $\hat{f}(d)$ according to:

$$\hat{f}(d) = \frac{C(d) - \frac{pn}{m} - qn\left(1 - \frac{1}{m}\right)}{(p-q)\left(1 - \frac{1}{m}\right)};$$

**return** $\hat{f}(d)$

The processing system 118 can perform one or more additional actions using the predicted quantity of times $\hat{f}(d)$ the source data was the cause of a message received from one of the client devices 102a-c. For example, the processing system 118 can perform analytics using the predicted quantity of times $\hat{f}(d)$, generate instructions that cause presentation of the predicted quantity of times $\hat{f}(d)$, or perform another appropriate action.

The processing system 118 can use equation (1) to predict the quantity of times, $\hat{f}(d)$, to reduce an influence of the noise values on the data in the matrix 122. For instance, since the combined data that was the basis of the message body includes one or more noise values and optionally the output value, use of equation (1) can improve an accuracy of the predicted quantity of times $\hat{f}(d)$ compared to using the value $C(d)$ stored in the matrix 122, e.g., the total count value.

In some implementations, the environment 100 can use multiple hash functions, each for a different message from multiple messages. Some messages from the multiple messages can include output values generated using the same hash function.

For example, the client device A 102a, and each of the other client devices B-C 102b-c, can maintain a database of hash functions 106. When determining to send a message to the processing system 118, the hash engine 104 can select one of the multiple hash functions from the hash functions database 106. This can increase the accuracy of the data received by the processing system 118, and any actions performed using the data, by reducing a number of the same collisions that can occur when using a single hash function. For instance, when using a single hash function, two source data values, X and Y, can result in the same output value $r_1$. By using two or more different hash functions, some of the hash functions might have a collision in which both X and Y result in the same output value $r$ while others will not. For example, some hash functions will map X to $r_2$ and Y to $r_3$. As a result, the processing system 118 can process more accurate data since all instances of X and Y will not map to the same output value $r_1$.

The processing system 118 or another system or combination of systems can generate the hash functions. For instance, the processing system 118 can generate $k$ independent hash functions $H = \{h_1, h_2, \ldots, h_k\}$. Each hash function can deterministically map a respective source data value $d$, e.g., any input value, to a discrete number in the domain M. For a particular LDP protocol, the $k$ independent hash functions have the same hashing domain size, i.e., have the same hashing range $m$. In some examples, hash functions of different LDP protocols can have a corresponding domain M at least some of which have a different hashing range m, e.g., $h_1$ can have the domain $M_1$, $h_2$ can have the domain $M_2$, and so on with some domains $M_i$ not equal to others $M_j$.

The processing system 118 can select at least some of the hash functions h that satisfy one or more generation criteria. Some generation criteria can require that a hash function h has a number of collisions that satisfies a collision criterion, e.g., as few collisions as possible. This can reduce utility loss by the processing system 118 when the processing system 118 processes the messages. In some examples, the generation criteria can require that hash function h has a substantially uniform random output distribution, e.g., reducing a likelihood that a collision occurs for high frequency source data $d$.

In some implementations, the processing system 118 can generate a hash function that maps URIs, e.g., web uniform resource locators ("URLs"). For source data x, the processing system can generate a hash function $h(d) : D \rightarrow [m]$ for which the support of D can be infimum.

The processing system 118 can perform one or more encoding operations. For instance, given a web URL as the input source data, the processing system can determine an encoding scheme to convert the web URLs into bits. For instance, the processing system can determine to apply ASCII encoding where every character in the web URL is mapped to a seven-bit value. The processing system can treat the resulting value as a big number.

The processing system 118 can determine a hash function, e.g., $h_k(d) = d + k \bmod m$. The processing system 118 can determine the hash function $h_k(d)$ if the input domain is substantially, e.g., almost, uniformly distributed, e.g., as defined by a threshold criterion.

When the input domain is not uniformly distributed, e.g., since most URLs have a "www" prefix, the processing system 118 can provide the web URL to a cryptographic hash function such as SHA256, so that the output is a 256-bit random value. The processing system 118 can then apply a mod function on to the output to further reduce the range of the output, e.g., $h_k(d) = $ SHA-256(d) mod m. This can provide a more uniform distribution for non-uniformly distributed source data.

The processing system 118 can generate $k$ hash functions as described above. The processing system 118 can maintain each of the $k$ hash functions in its own hash function database 128. The processing system 118 can send one or more of the $k$ hash functions to each of the client devices A-C 102a-c, e.g., along with its public key for encrypting the messages.

When the processing system 118 provides a different hash function to each of the client devices A-C 102a-c, and only one hash function, the processing system 118 can maintain a mapping that indicates which hash function was provided to which client device A-C 102a-c. Upon receiving a message from one of the client devices A-C 102a-c, the processing system 118 can use the mapping to determine which hash function was used to generate data in the message.

When the processing system 118 provides multiple hash functions to at least some of the client devices A-C 102a-c, the client devices A-C 102a-c can include a hash function identifier in the messages they generate. For instance, when there are three hash functions, the client device A's 102a message engine can generate a message that includes both the combined data for the noise values and optionally the output value and an identifier for the one of the three hash functions used to generate the values. The client device A 102a would use the same hash function to generate all of the values for any particular message. The encryption engine 110 can then encrypt the hashed output values and the hash function identifier for transmission to the processing system.

When the processing system 118 receives values that can be generated using any of multiple hash functions, the processing system 118 maintains the matrix 122 as a three-dimensional data structure, e.g., array. For instance, the matrix can have a first array indexed by the hash function from the $k$ hash functions. That first array can identify, for each hash function, a corresponding second array for the output values of that respective hash function. The second arrays can have a dimension m given the domain M. In implementations in which the domain's M vary given the hash function $h$, the second arrays can have different dimensions $m_k$. In implementations in which all of the hash functions have the same domain M, all of the second arrays can have the same dimension m.

When the processing system 118 processes a received message, whether a singular message or a message from the data batch, the processing system can determine the hash function $h_j$ that applies to the message. The processing system 118 can then update the data structure for that corresponding hash function $h_j$. For instance, for the matrix M, the hash function $h_j$, and the value $i$ from the message, the processing system 118 can update the location at $M[j][i]$, e.g., $M[j][i] = M[j][i] + 1$.

The messages have a size s that is smaller than the size of the domain M for the hash function. The domain M for the hash function is smaller than the size of all possible values for the source data $d$.

The message size s can be any appropriate value, determined by any appropriate device or system, or a combination of these. In some implementations, the client device A 102a selects the message size s. In these implementations, the client device A 102a provides the message size to the processing system 118, e.g., as part of the message, or the processing system 118 can determine the message size $s$ using data for the message, e.g., a number of entries in the message body. In some implementations, the processing system 118 determines the message size $s$ and provides data that indicates the message size s to a respective client device 102a. At least some of the client devices 102a-c can have the same message size s. At least some of the client devices 102a-c can have different message sizes s.

The message size $s$ can be determined using any appropriate process. For instance, the message size can be computed using a differential privacy parameter $\varepsilon$. In some examples, the message size can be determined using equation (4) below for which $m$ is the hashing range for the domain M.

$$s = \frac{m}{(e^\varepsilon + 1)} \tag{4}$$

When the environment 100 uses different message sizes s for different devices 102a-c, the different message sizes s can be based on different hashing ranges m, different differential privacy parameters $\varepsilon$, or a combination of both.

The analysis engine 140 can determine the variance associated with particular LDP protocols. Specifically, the analysis engine 140 can determine a quantity of times, $\hat{f}(d)$, that the source data $d$ was the cause of a message received from one of the client devices 102a-c over $k$ hash functions for the LDP protocol. The analysis engine 140 can also determine the variance of the sum of the source data $d$ appearing in the matrix 122, also denoted as $\sum_{j=1}^{k} C[j, h_j(d)]$. The analysis engine 140 can also determine the variance of $\hat{f}(d)$.

The analysis engine 140 determines a value in the matrix 122 for the output value $h_j(d)$ for each hash function. For instance, analysis engine 140 receives the output values from the hash engine 126. The analysis engine 140 accesses the matrix 122 and determines the values $C[j, h_j(d)]$ stored in the matrix 122 for each output value $h_j(d)$, e.g., a total count of the $h_j(d)$ -th entry stored in the $j^{th}$ row corresponding to the hash function $h_j$ of the matrix 122.

The analysis engine 140 can use equation (5), below, to predict the quantity of times $\hat{f}(d)$ that the source data was the cause of a message received from one of the client devices 102a-c over $k$ hash functions.

$$\hat{f}(d) = \sum_{j=1}^{k} \frac{C[j, h_j(d)] - \frac{n}{km}(p-q) - \frac{qn}{k}}{\left(1 - \frac{1}{m}\right)(p-q)} \qquad (5)$$

In equation (5), the $k$ hash functions are denoted as $\mathcal{H} = \{h_j: \mathcal{D} \rightarrow [m] : j \in [k]\}$. $p$, $q$, and $n$ are defined above. $C[j, h_j(d)]$ is the count of the $h_j(d)$ -th entry in the j-th row in the matrix 122 corresponding to the hash function $h_j$.

The processing system 118 can perform an action using the predicted quantity of times $\hat{f}(d)$. For example, the processing system 118 can perform analytics using the predicted quantity of times $\hat{f}(d)$, generate instructions that cause presentation of the predicted quantity of times $\hat{f}(d)$, or perform another appropriate action.

The analysis engine 140 can determine the variance of the sum of the source data $d$ appearing in the matrix 122 over $k$ hash functions, denoted as $\sum_{j=1}^{k} C[j, h_j(d)]$.

For example, the analysis engine 140 can use equation (6) below to determine the variance of the sum of the source data $d$ appearing in the matrix 122 over the $k$ hash functions.

$$Var\left(\sum_{j=1}^{k} C[j, h_j(d)]\right) = f(d)\left(p - \frac{p^2}{k}\right) + (n - f(d))\left[\frac{p}{m}\left(1 - \frac{p}{k}\right) + \left(1 - \frac{1}{m}\right)q\left(1 - \frac{q}{k}\right)\right] + \frac{(p-q)^2}{km}\left(1 - \frac{1}{m}\right)\left(\sum_{d^* \neq d}^{\square}(f(d^*))^2\right) \qquad (6)$$

In equation (6), $p$, $q$, $k$, $n$, and $m$ are defined above. $f(d)$ is the true count of the quantity of times the source data was the cause of a message over k hash functions.

In equation (6), the first term $f(d)\left(p - \frac{p^2}{k}\right)$ represents the impact of the true count on the variance. The second term $(n - f(d))\left[\frac{p}{m}\left(1 - \frac{p}{k}\right) + \left(1 - \frac{1}{m}\right)q\left(1 - \frac{q}{k}\right)\right]$ characterizes how other source data impact the variance due to perturbation. The third term $\frac{(p-q)^2}{km}\left(1 - \frac{1}{m}\right)\left(\sum_{d^* \neq d}^{\square}(f(d^*))^2\right)$ characterizes the impact of hash collisions. Thus, the variance of the total count of the output value over the one or more hash functions takes into account hash collisions and randomness of the LDP protocol.

The analysis engine 140 can also determine the variance of $\hat{f}(d)$. The variance can represent a measure of accuracy for the LDP protocol. For example, a higher variance can represent a higher probability that $\hat{f}(d)$ has a larger difference from the true count. A lower variance can represent a lower probability that $\hat{f}(d)$ has a larger difference from the true count. Thus a lower variance represents a more stable or more accurate $\hat{f}(d)$.

The analysis engine 140 can determine the variance of the quantity of times the source data was a cause of a message over the one or more hash functions from the variance of the total count of the output value over the one or more hash functions. For example, the analysis engine 140 can use equation (7) below to determine the variance of the quantity of times the source data was a cause of a message over the one or more hash functions.

$$Var[\hat{f}(d)] = \frac{Var\left(\sum_{j=1}^{k} C[j, h_j, (d)]\right)}{(p-q)^2\left(1 - \frac{1}{m}\right)^2} \qquad (7)$$

In equation (7), $p$, $q$, and $m$ are defined above. $Var\left(\sum_{j=1}^{k} C[j, h_j, (d)]\right)$ is defined above in equation (6).

While equation (7) provides a general measure of variance given a set of mechanism parameters, e.g., LDP parameters, number of hash functions $k$, in many applications there can be some specific frequency regime that is of particular interest, as noted above. Thus, if the variance with respect to that particular frequency regime can be reduced, then the overall utility to the recipient processing system can be increased because the utility of the data of actual interest has a lower variance.

In some implementations, the value of the LDP parameter $\varepsilon$ is predefined and known. The value of $q$ can be expressed as a function of $p$ and $m$:

$$q \geq \frac{m - e^\epsilon + e^\epsilon p - p}{(m-1)\left(\frac{e^\epsilon}{p} - e^\epsilon + 1\right)} \qquad (8)$$

Therefore, when $n$ (number of users), $m$ (size of hash domain), $k$ (number of hash functions), and $\varepsilon$ are all considered to be constants, the variance can be expressed as a function that is determined by $f(d)$ and $p$. That is, the variance of equation (7) is determined by the only remaining non-constant variables, which are $f(d)$ and $p$. Then for any $f(d)$ of interest, the mechanism parameter $p$ can be derived from an optimization problem such that the variance is reduced and in some implementations minimized. The parameter $p$ can expressed as the solution of a minimization function as follows:

$$p = \operatorname{argmin}\left\{\frac{kw - p + \lambda(w-1)(kw - p - wp)}{k(1-p)^2 p}\right\} \qquad (9)$$

where,

$$w \triangleq e^\epsilon (1 - p) + p$$

and

$$\lambda = f(d)/n.$$

The analysis engine 140 can solve the minimization problem to identify the value of $p$ that minimizes the variance for a particular frequency range of interest $f(d)$. This process of finding the value of $p$ that minimizes the variance for a *particular f(d)* of interest can be represented by algorithm 4 below:

**Algorithm 4 Optimal privacy mechanism parameters**

**Input**: $\epsilon$: privacy parameter, $\lambda$: ratio of $f(d)/n$, $k$: size of the hash universe.

**Output**: Optimal perturbation parameters $p$, $s$: length of message vector **x**.

Create function $f(p)$ that returns:

$$\frac{kw - p + \lambda(w-1)(kw - p - wp)}{k(1-p)^2 p};$$

Initialize $p_l = 0.5$ and $p_r = 1$;

**while** $p_l \leq p_r$ **do**

$$p_o = p_l + \frac{p_r - p_l}{3};$$

$$p_1 = p_r - \frac{p_r - p_l}{3};$$

**if** $f(p_0) \leq f(p_1)$ **then**

$$p_r = p_1;$$

**else**

$$p_l = p_0;$$

**end if**

**end while**

$$p \leftarrow \frac{(p_l + p_r)}{2}, s \leftarrow \left\lceil \frac{m}{1 + \left(\frac{1}{p-1}\right)e^\epsilon} \right\rceil;$$

**return** $p$, $s$

In the above algorithm, a binary search is performed, which starts with a left pointer and a right pointer, which, in an iterative process, converges on the value of $p$ that minimizes the function f(p) corresponding to the variance for *f(d)*. In this case, the possible probability values for p are bounded within [0.5, 1], corresponding to $p_l$ (left) and $p_r$ (right). With the value of $p$ determined, the message length s can be determined as a function of the determined $p$, the fixed values of $\varepsilon$, and m.

Thus, the output of the algorithm provides a value of $p$ to use in determining whether to include a hashed value of a raw data item in the vector x according to the client device LDP mechanism. Additionally, the length of the message s is also determined for that $p$ value in order to obtain a minimum variance value for a given frequency range. This means that the value of $p$ may be different for different frequency ranges as well as for other values for the constants such as the differential privacy parameter $\varepsilon$. Consequently, based on a given set of parameters and a known frequency range of interest, the client device mechanism for generating privacy protected messages to the recipient system can be adjusted to minimize the variance for that frequency range while still maintaining the specified degree of privacy protection. In practice, the analysis engine 140 can determine a frequency range of interest, compute the corresponding values of $p$ and s, and then provide those values to each client device 102 for use in generating the privatized messages.

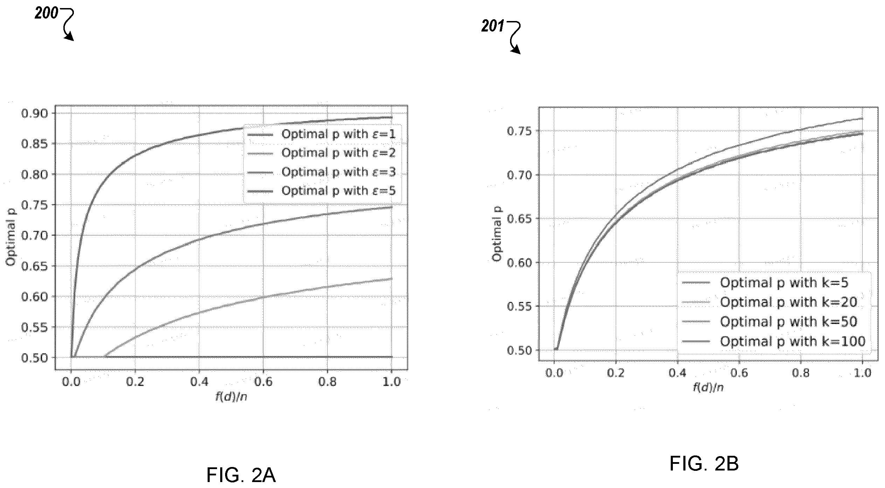

As described above, the other mechanism parameters are generally seen as constants. However, the particular constant values chosen can impact the computed values for $p$ that minimize the variance. FIGS. 2A-2C illustrate relationships between mechanism parameters.

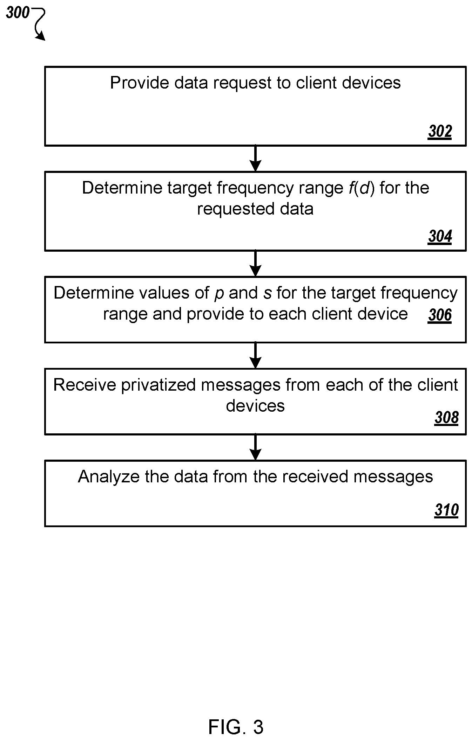

In FIG. 2A, diagram 200 illustrate curves for values of $p$ (y-axis) with respect to $f(d)/n$ (x-axis) for different values of the local differential privacy parameter $\varepsilon$. The value of $f(d)/n$ represents the actual frequency of the data divided by the number of users. The value of the differential privacy parameter can be set, for example, based on a required level of privacy guarantee provided by the local differential privacy mechanism (a smaller $\varepsilon$, means greater privacy guarantee). FIG. 3A illustrates that the value of $p$ changes with $f(d)/n$ as well as with the value of $\varepsilon$. For example, for a $f(d)/n$ of 0.6, the value to which $p$ should be set may be approximately 0.6 when $\varepsilon = 2$ and approximately 0.72 when $\varepsilon = 3$.

In FIG. 2B, diagram 201 illustrates curves for values of $p$ (y-axis) with respect to $f(d)/n$ (x-axis) for different values of the number of hash functions $k$. While the plots are similar, the values for $p$ are generally a little higher when the number of hash functions are lower.

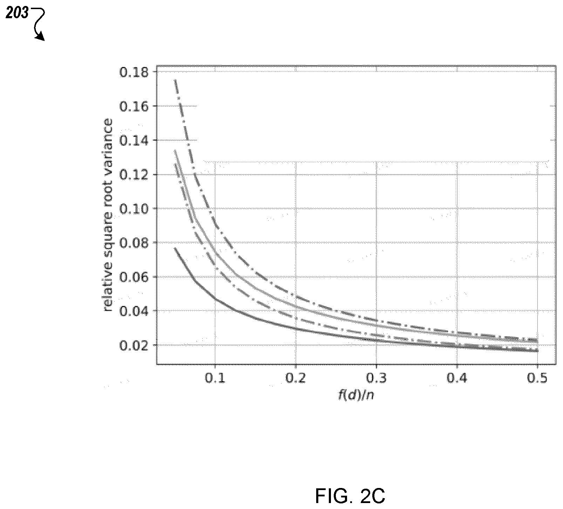

FIG. 2C diagram 202 illustrates plots of variance (y-axis) with respect to $f(d)/n$. In particular, the dashed lines represent conventional systems while the solid lines represent variance values with an optimal value of p selected for each f(d). Additionally, the top two plots represent the same value of the differential privacy parameter ($\varepsilon$ = 3) and the bottom two plots represent the same value of the differential privacy parameter ($\varepsilon$ =5). As illustrated in FIG. 3C, the variance is generally lower that the conventional techniques for the same values of $\varepsilon$.

Referring back to FIG. 1, the processing system 118 and the modification system 112 are each an example of a system implemented as computer programs on one or more computers in one or more locations, in which the systems, components, and techniques described in this specification are implemented. The client devices A-C 102a-c can include personal computers, mobile communication devices, and other devices that can send and receive data over the network 132. The network 132, such as a local area network ("LAN"), wide area network ("WAN"), the Internet, or a combination thereof, connects the client devices A-C 102a-c, the modification system 112, and the processing system 118. The network 132 can be used to implement one or more encryption channels through which messages are communicated. The processing system 118, the modification system 112, or a combination of both, can use a single computer or multiple computers operating in conjunction with one another, including, for example, a set of remote computers deployed as a cloud computing service.

The processing system 118, the modification system 112, or both, can each include several different functional components, including the message modification engine 114, the shuffler engine 116, the matrix update engine 120, the decryption engine 124, the hash engine 126, the prediction engine 130, and the analysis engine 140. The message modification engine 114, the shuffler engine 116, the matrix update engine 120, the decryption engine 124, the hash engine 126, the prediction engine 130, the analysis engine 140, or a combination of these, can include one or more data processing apparatuses, can be implemented in code, or a combination of both. For instance, each of the message modification engine 114, the shuffler engine 116, the matrix update engine 120, the decryption engine 124, the hash engine 126, the prediction engine 130, and the analysis engine 140 can include one or more data processors and instructions that cause the one or more data processors to perform the operations discussed herein.

The various functional components of the processing system 118, the modification system 112, or both, can be installed on one or more computers as separate functional components or as different modules of a same functional component. For example, the components of the processing system 118, the modification system 112, or both, can be implemented as computer programs installed on one or more computers in one or more locations that are coupled to each through a network. In cloud-based systems for example, these components can be implemented by individual computing nodes of a distributed computing system.

FIG. 3 is a flow diagram of an example process 300 for modifying a privacy mechanism to reduce variance for a targeted frequency range. For example, the process 300 can be implemented by a system, for example the processing system 118 from the environment 100.

The system provides a request for data to a collection of client devices (302). The request can be received, for example, by client devices 102 of FIG. 1. The processing system may request a specific type of data items from the client devices. For example, the request may be for particular selected items, web addresses accessed, emojis used, etc.

The system determines a target frequency range for the requested data (304). The targeted frequency range can be identified from the request for data, which may indicate a particular interest, e.g., a top x values, a bottom x values, etc.

The system provides values of $p$ and s to each client device for use in privatizing messages to send to the system (306). Specifically, the system determines values for $p$ and s based an the determined frequency range of interest.

The system computes values for the probability $p$ of including a given data item in a message to the recipient system and a corresponding message length s according to the target frequency range. The values for $p$ and s are computed as the result of a minimization of the variance for the target frequency range given a set of constant value parameters. For example, as illustrated by algorithm 4, an iterative process can be used to locate a minimized value of $p$, which can then be used to determine the corresponding value of s.

The system receives privatized messages from each of the client devices (308). Each client device generates privatized messages in response to the data request and according to the received mechanism parameters $p$ and s, where $p$ is used as the probability of including each data item value in a message of length s that is responsive to the request. In some implementations the received messages have also been encrypted according to a particular public encryption key associated with the system.

The system can analyze the data from the received messages (310). The system can extract the privatized data from encrypted messages by decrypting the messages using the private key of the system. Furthermore, the system can aggregate the data, e.g., to generate frequency histograms such that the data represented in the targeted frequency range has a minimized variance, corresponding to a higher utility.

In some implementations, the device might execute a social media application, e.g., a native application or by accessing a web site. The device and the processing system can collaborate on data processing when the device provides data to the processing system. By using one or more processes described in this specification, the device can provide data, e.g., data records, to the processing system without sharing particular user data that is associated with a corresponding user.

For situations in which the systems discussed here collect personal information about people, or may make use of personal information, the people may be provided with an opportunity to control whether programs or features collect personal information, or to control whether and/or how the system operates. In addition, as described above, data is anonymized in one or more ways before it is stored or used, so that personally identifiable information is removed. For example, the message modification engine can remove any device or other identification data from messages received from the client devices A-C. The shuffler engine can randomly permute an order in which messages are included in a data batch to reduce a likelihood of personally identifiable information being inferred from the data batch.

In this specification, the term "database" is used broadly to refer to any collection of data: the data does not need to be structured in any particular way, or structured at all, and it can be stored on storage devices in one or more locations. A database can be implemented on any appropriate type of memory.

In this specification the term "engine" is used broadly to refer to a software-based system, subsystem, or process that is programmed to perform one or more specific functions. Generally, an engine will be implemented as one or more software modules or components, installed on one or more computers in one or more locations. In some instances, one or more computers will be dedicated to a particular engine. In some instances, multiple engines can be installed and running on the same computer or computers.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform those operations or actions. That one or more computer programs is configured to perform particular operations or actions means that the one or more programs include instructions that, when executed by data processing apparatus, cause the apparatus to perform those operations or actions. That special-purpose logic circuitry is configured to perform particular operations or actions means that the circuitry has electronic logic that performs those operations or actions.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non-transitory program carrier for execution by, or to control the operation of, a data processing apparatus. Alternatively or in addition, the program instructions can be encoded on an artificially-generated propagated signal, e.g., a machine-generated electrical, optical, or electromagnetic signal, that is generated to encode information for transmission to a suitable receiver apparatus for execution by a data processing apparatus. One or more computer storage media can include a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can be or include special purpose logic circuitry, e.g., a field programmable gate array ("FPGA") or an application-specific integrated circuit ("ASIC"). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can be performed by, and apparatus can also be implemented as, special purpose logic circuitry, e.g., a field programmable gate array ("FPGA") or an application-specific integrated circuit ("ASIC").

Computers suitable for the execution of a computer program include, by way of example, general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. A computer can be embedded in another device, e.g., a mobile telephone, a smart phone, a headset, a personal digital assistant ("PDA"), a mobile audio or video player, a game console, a Global Positioning System ("GPS") receiver, or a portable storage device, e.g., a universal serial bus ("USB") flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a liquid crystal display ("LCD"), an organic light emitting diode ("OLED") or other monitor, for displaying information to the user and a keyboard and a pointing device, e.g., a mouse or a trackball or a touchscreen, by which the user can provide input to the computer. Other kinds of devices can be used to provide for interaction with a user as well. For example, feedback provided to the user can be any form of sensory feedback, e.g., visual feedback, auditory feedback, or tactile feedback; and input from the user can be received in any form, including acoustic, speech, or tactile input. In some examples, a computer can interact with a user by sending documents to and receiving documents from a device that is used by the user; for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an Hypertext Markup Language ("HTML") page, to a user device, e.g., for purposes of displaying data to and receiving user input from a user device, which acts as a client. Data generated at the user device, e.g., a result of user interaction with the user device, can be received from the user device at the server.

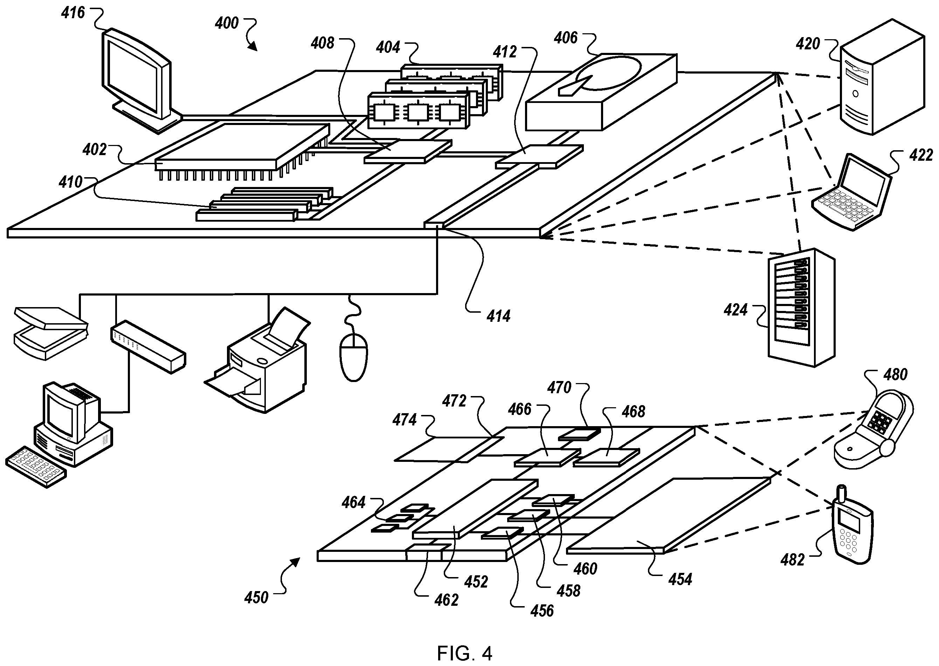

FIG. 4 is a block diagram of computing devices 300, 350 that may be used to implement the systems and methods described in this specification, as either a client or as a server system or plurality of server systems. Computing device 400 is intended to represent various forms of digital computers, such as laptops, desktops, workstations, personal digital assistants, servers, blade servers, mainframes, and other appropriate computers. Computing device 450 is intended to represent various forms of mobile devices, such as personal digital assistants, cellular telephones, smartphones, smartwatches, head-worn devices, and other similar computing devices. The components shown here, their connections and relationships, and their functions, are meant to be exemplary only, and are not meant to limit implementations described and/or claimed in this specification.

Computing device 400 includes a processor 402, memory 404, a storage device 406, a high-speed interface 408 connecting to memory 404 and high-speed expansion ports 410, and a low speed interface 412 connecting to low speed bus 414 and storage device 406. Each of the components 402, 404, 406, 408, 410, and 412, are interconnected using various busses, and may be mounted on a common motherboard or in other manners as appropriate. The processor 402 can process instructions for execution within the computing device 400, including instructions stored in the memory 404 or on the storage device 406 to display graphical information for a GUI on an external input/output device, such as display 416 coupled to high speed interface 408. In other implementations, multiple processors and/or multiple buses may be used, as appropriate, along with multiple memories and types of memory. Also, multiple computing devices 400 may be connected, with each device providing portions of the necessary operations (e.g., as a server bank, a group of blade servers, or a multi-processor system).

The memory 404 stores information within the computing device 400. In one implementation, the memory 404 is a computer-readable medium. In one implementation, the memory 404 is a volatile memory unit or units. In another implementation, the memory 404 is a non-volatile memory unit or units.

The storage device 406 is capable of providing mass storage for the computing device 400. In one implementation, the storage device 406 is a computer-readable medium. In various different implementations, the storage device 406 may be a floppy disk device, a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 404, the storage device 406, or memory on processor 402.

The high speed controller 408 manages bandwidth-intensive operations for the computing device 400, while the low speed controller 412 manages lower bandwidth-intensive operations. Such allocation of duties is exemplary only. In one implementation, the high-speed controller 408 is coupled to memory 404, display 416 (e.g., through a graphics processor or accelerator), and to high-speed expansion ports 410, which may accept various expansion cards (not shown). In the implementation, low-speed controller 412 is coupled to storage device 406 and low-speed expansion port 414. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 400 may be implemented in a number of different forms, as shown in the figure. For example, it may be implemented as a standard server 420, or multiple times in a group of such servers. It may also be implemented as part of a rack server system 424. In addition, it may be implemented in a personal computer such as a laptop computer 422. Alternatively, components from computing device 400 may be combined with other components in a mobile device (not shown), such as device 450. Each of such devices may contain one or more of computing devices 400, 450, and an entire system may be made up of multiple computing devices 400, 450 communicating with each other.

Computing device 450 includes a processor 452, memory 464, an input/output device such as a display 454, a communication interface 466, and a transceiver 468, among other components. The device 450 may also be provided with a storage device, such as a microdrive or other device, to provide additional storage. Each of the components 450, 452, 464, 454, 466, and 468, are interconnected using various buses, and several of the components may be mounted on a common motherboard or in other manners as appropriate.

The processor 452 can process instructions for execution within the computing device 450, including instructions stored in the memory 464. The processor may also include separate analog and digital processors. The processor may provide, for example, for coordination of the other components of the device 450, such as control of user interfaces, applications run by device 450, and wireless communication by device 450.

Processor 452 may communicate with a user through control interface 458 and display interface 456 coupled to a display 454. The display 454 may be, for example, a TFT LCD display or an OLED display, or other appropriate display technology. The display interface 456 may comprise appropriate circuitry for driving the display 454 to present graphical and other information to a user. The control interface 458 may receive commands from a user and convert them for submission to the processor 452. In addition, an external interface 462 may be provided in communication with processor 452, so as to enable near area communication of device 450 with other devices. External interface 462 may provide, for example, for wired communication (e.g., via a docking procedure) or for wireless communication (e.g., via Bluetooth or other such technologies).

The memory 464 stores information within the computing device 450. In one implementation, the memory 464 is a computer-readable medium. In one implementation, the memory 464 is a volatile memory unit or units. In another implementation, the memory 464 is a non-volatile memory unit or units. Expansion memory 474 may also be provided and connected to device 450 through expansion interface 472, which may include, for example, a SIMM card interface. Such expansion memory 474 may provide extra storage space for device 450, or may also store applications or other information for device 450. Specifically, expansion memory 474 may include instructions to carry out or supplement the processes described above, and may include secure information also. Thus, for example, expansion memory 474 may be provided as a security module for device 450, and may be programmed with instructions that permit secure use of device 450. In addition, secure applications may be provided via the SIMM cards, along with additional information, such as placing identifying information on the SIMM card in a non-hackable manner.

The memory may include for example, flash memory and/or MRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 464, expansion memory 474, or memory on processor 452.

Device 450 may communicate wirelessly through communication interface 466, which may include digital signal processing circuitry where necessary. Communication interface 466 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 468. In addition, short-range communication may occur, such as using a Bluetooth, Wi-Fi, or other such transceiver (not shown). In addition, GPS receiver module 470 may provide additional wireless data to device 450, which may be used as appropriate by applications running on device 450.

Device 450 may also communicate audibly using audio codec 460, which may receive spoken information from a user and convert it to usable digital information. Audio codec 460 may likewise generate audible sound for a user, such as through a speaker, e.g., in a handset of device 450. Such sound may include sound from voice telephone calls, may include recorded sound (e.g., voice messages, music files, etc.) and may also include sound generated by applications operating on device 450.

The computing device 450 may be implemented in a number of different forms, as shown in the figure. For example, it may be implemented as a cellular telephone 480. It may also be implemented as part of a smartphone 482, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

In addition to the embodiments of the attached claims and the embodiments described above, the following embodiments are also innovative:

Embodiment 1 is a method, the method comprising: sending a request for data to each of a plurality of user devices; determining a target frequency range for the requested data; computing a value for an inclusion probability according to the target frequency range; providing the value for the inclusion probability to each of the plurality of user devices; receiving privatized messages from each of the plurality of user devices, each privatized message being generated according to the provided value for the inclusion probability; and analyzing the privatized data extracted from the received messages.

Embodiment 2 is the method of embodiment 1, wherein computing the value for the probability comprises: using the target frequency range and a plurality of constant value mechanism parameters to determine the inclusion probability value that minimizes a variance of the target frequency range; and determining a message length corresponding to the inclusion probability value.

Embodiment 3 is the method of any one of embodiments 1 through 2, wherein determining the inclusion probability value comprises performing a binary search to determine a value for the inclusion probability that minimizes the variance.

Embodiment 4 is the method of any one of embodiments 1 through 3, wherein generating, by each client device, privatized messages comprises: for each data item: selecting a hash function from a collection of hash functions; calculating a hashed value of the data item using the selected hash function; and performing local differential privacy including determining whether to add the hashed value to an output vector according to the determined inclusion probability.

Embodiment 5 is the method of any one of embodiments 1 through 4, wherein generating the privatized messages further comprises applying an encryption to each message.

Embodiment 6 is the method of any one of embodiments 1 through 5, wherein the request for data is a request for items and their respective frequencies allowing the recipient to use aggregated data received from multiple sources to determine a top-x items, and wherein the target frequency range is determined based on the frequencies of the top-x items.

Embodiment 7 is the method of any one of embodiments 1 through 6, wherein aggregated data in the privatized messages corresponding to data items in the target frequency range has a lower variance than data items in other frequency ranges.

Embodiment 8 is a system comprising: one or more computers and one or more storage devices storing instructions that are operable, when executed by the one or more computers, to cause the one or more computers to perform the method of any one of embodiments 1 to 7.

Embodiment 9 is computer storage medium encoded with a computer program, the program comprising instructions that are operable, when executed by data processing apparatus, to cause the data processing apparatus to perform the method of any one of embodiments 1 to 7.

While this specification contains many specific implementation details, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some instances be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

In each instance where an HTML file is mentioned, other file types or formats may be substituted. For instance, an HTML file may be replaced by an XML, JSON, plain text, or other types of files. Moreover, where a table or hash table is mentioned, other data structures, such as spreadsheets, relational databases, or structured files, may be used.

Particular implementations of the invention have been described. Other implementations are within the scope of the following claims. For example, the operations recited in the claims, described in the specification, or depicted in the figures can be performed in a different order and still achieve desirable results. In some implementations, multitasking and parallel processing may be advantageous.

**Claims**

1.  A method (300) comprising:

    sending (302) a request for data to each of a plurality of user devices;
    determining (304) a target frequency range for the requested data;
    computing (306) a value for an inclusion probability according to the target frequency range;
    providing the value for the inclusion probability to each of the plurality of user devices;
    receiving (308) privatized messages from each of the plurality of user devices, each privatized message being generated according to the provided value for the inclusion probability; and
    analyzing (310) the privatized data extracted from the received messages.

2.  The method (300) of claim 1, wherein computing the value for the probability comprises:

    using the target frequency range and a plurality of constant value mechanism parameters to determine the inclusion probability value that minimizes a variance of the target frequency range; and
    determining a message length corresponding to the inclusion probability value.

3.  The method (300) of claim 2, wherein determining the inclusion probability value comprises performing a binary search to determine a value for the inclusion probability that minimizes the variance.

4.  The method (300) of claim 1, wherein generating, by each client device, privatized messages comprises:
    for each data item:

    selecting a hash function from a collection of hash functions;
    calculating a hashed value of the data item using the selected hash function; and
    performing local differential privacy including determining whether to add the hashed value to an output vector according to the determined inclusion probability.

5.  The method (300) of claim 4, wherein generating the privatized messages further comprises applying an encryption to each message.

6.  The method (300) of claim 1, wherein the request for data is a request for items and their respective frequencies allowing the recipient to use aggregated data received from multiple sources to determine a top-x items, and wherein the target frequency range is determined based on the frequencies of the top-x items.

7. The method (300) of claim 1, wherein aggregated data in the privatized messages corresponding to data items in the target frequency range has a lower variance than data items in other frequency ranges.

8. A system (400) comprising:
one or more computers and one or more storage devices on which are stored instructions that are operable, when executed by the one or more computers, to cause the one or more computers to perform operations comprising:

sending a request for data to each of a plurality of user devices;
determining a target frequency range for the requested data;
computing a value for an inclusion probability according to the target frequency range;
providing the value for the inclusion probability to each of the plurality of user devices;
receiving privatized messages from each of the plurality of user devices, each privatized message being generated according to the provided value for the inclusion probability; and
analyzing the privatized data extracted from the received messages.

9. The system (400) of claim 8, wherein computing the value for the probability comprises:

using the target frequency range and a plurality of constant value mechanism parameters to determine the inclusion probability value that minimizes a variance of the target frequency range; and
determining a message length corresponding to the inclusion probability value.

10. The system (400) of claim 9, wherein determining the inclusion probability value comprises performing a binary search to determine a value for the inclusion probability that minimizes the variance.

11. The system (400) of claim 8, wherein generating, by each client device, privatized messages comprises:
for each data item:

selecting a hash function from a collection of hash functions;
calculating a hashed value of the data item using the selected hash function; and
performing local differential privacy including determining whether to add the hashed value to an output vector according to the determined inclusion probability.

12. The system (400) of claim 11, wherein generating the privatized messages further comprises applying an encryption to each message.

13. The system (400) of claim 8, wherein the request for data is a request for items and their respective frequencies allowing the recipient to use aggregated data received from multiple sources to determine a top-x items, and wherein the target frequency range is determined based on the frequencies of the top-x items.

14. The system (400) of claim 8, wherein aggregated data in the privatized messages corresponding to data items in the target frequency range has a lower variance than data items in other frequency ranges.

15. One or more computer-readable storage media encoded with instructions that, when executed by one or more computers, cause the one or more computers to perform the method according to any of claims 1-7.

FIG. 1

FIG. 2A

FIG. 2B

FIG. 2C

*300*

```
┌─────────────────────────────────────────────┐
│   Provide data request to client devices     │
│                                               │
│                                     302       │
└─────────────────────────────────────────────┘
                      │
                      ▼
┌─────────────────────────────────────────────┐
│   Determine target frequency range f(d) for   │
│              the requested data               │
│                                     304       │
└─────────────────────────────────────────────┘
                      │
                      ▼
┌─────────────────────────────────────────────┐
│  Determine values of p and s for the target   │
│  frequency range and provide to each client   │
│                device         306             │
└─────────────────────────────────────────────┘
                      │
                      ▼
┌─────────────────────────────────────────────┐
│  Receive privatized messages from each of the │
│              client devices                   │
│                                     308       │
└─────────────────────────────────────────────┘
                      │
                      ▼
┌─────────────────────────────────────────────┐
│   Analyze the data from the received messages │
│                                     310       │
└─────────────────────────────────────────────┘
```

FIG. 3

FIG. 4

Europäisches
Patentamt

European
Patent Office

Office européen
des brevets

# EUROPEAN SEARCH REPORT

**Application Number**

EP 25 19 7410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/414258 A1 (WANG GANG [US] ET AL) 29 December 2022 (2022-12-29) | 1,4-8, 11-15 | INV. H04L9/00 |
| A | * abstract * <br> * paragraphs [0003] - [0015] * <br> * paragraphs [0023] - [0087] * <br> ----- | 2,3,9,10 | |
| A | US 2024/243900 A1 (SKVORTSO EVGENY [US] ET AL) 18 July 2024 (2024-07-18) <br> * abstract * <br> * paragraphs [0047] - [0082] * <br> ----- | 1-15 | |

| | |
|---|---|
| **TECHNICAL FIELDS SEARCHED (IPC)** | |
| H04L | |

The present search report has been drawn up for all claims

| Place of search | Date of completion of the search | Examiner |
|---|---|---|
| Munich | 5 December 2025 | Di Felice, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  & : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 7410

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2025

| Patent document cited in search report | Publication date | Patent family member(s) | Publication date |
|---|---|---|---|
| US 2022414258 A1 | 29-12-2022 | CN 115087978 A | 20-09-2022 |
| | | CN 117313139 A | 29-12-2023 |
| | | EP 4049165 A1 | 31-08-2022 |
| | | EP 4198787 A1 | 21-06-2023 |
| | | JP 7279209 B2 | 22-05-2023 |
| | | JP 7575522 B2 | 29-10-2024 |
| | | JP 2023100895 A | 19-07-2023 |
| | | JP 2023513649 A | 03-04-2023 |
| | | US 2022414258 A1 | 29-12-2022 |
| | | US 2025053681 A1 | 13-02-2025 |
| | | WO 2022154801 A1 | 21-07-2022 |
| US 2024243900 A1 | 18-07-2024 | EP 4338369 A1 | 20-03-2024 |
| | | US 2024243900 A1 | 18-07-2024 |
| | | US 2025343670 A1 | 06-11-2025 |
| | | WO 2023244216 A1 | 21-12-2023 |

EPO FORM P0459

For more details about this annex : see Official Journal of the European Patent Office, No. 12/82